# DEMANDE DE BREVET EUROPEEN

(11) **EP 0 622 268 A1**
(43) Date de publication de la demande: **02.11.1994**
(21) Numéro de dépôt: 94400825.9
(22) Date de dépôt: 15.04.1994
(51) Int. Cl.: B60N 2/36

(54) **Siège escamotable à dossier basculant**

(30) Priorité: 27.04.1993 FR 9304934
(71) Demandeur: Société Anonyme dite: REGIE NATIONALE DES USINES RENAULT, F-92109 Boulogne Billancourt (FR)
(72) Inventeur: Guarda, René, F-78990 Elancourt (FR)
(74) Mandataire: Ernst-Schonberg, Michel

(57) **Abrégé**

Siège escamotable à dossier basculant (31) qui possède une assise (11) supportée à l'avant par des béquilles (12) articulées à leurs extrémités autour d'axes transversaux (13, 14) portés respectivement par l'assise et par un élément de la structure (4) du véhicule, tandisque le dossier (31) est relié à sa partie inférieure audit élément de structure (4) par des biellettes (33) basculantes et porte dans sa partie supérieure au moins un doigt (34) de verrouillage coopérant avec une gâche (35) latérale solidaire d'un autre élément de la structure, caractérisé par le fait que l'assise (11) est montée à basculement d'un angle de 180° autour de l'axe (14) d'articulation de la béquille (12) porté par l'élément de la structure (4) du véhicule tandisque la paroi de fond (37) du dossier (31) articulé sur l'assise (11) occupe une position avancée qui limite l'étendue d'un plateau de chargement du véhicule formé par le support (4) du siège et par la face inférieure (23) de l'assise.

## Description

L'invention concerne un siège escamotable à dossier basculant qui possède une assise supportée à l'avant par des béquilles articulées à leurs extrémités autour d'axes transversaux portés respectivement par l'assise et par la structure du véhicule, et dans lequel le dossier est relié par sa partie inférieure à la dite structure par des biellettes basculantes et porte dans sa partie supérieure au moins un doigt de verrouillage coopérant avec une gâche latérale solidaire de la structure.

La publication FR-A-2539084 décrit un siège sur lequel les biellettes permettent de passer d'une position extrême arrière à une position extrême avant et de rabattre le dossier sur l'assise pour augmenter le volume de chargement du véhicule.

La publication FR-A-2463697 décrit un siège dont l'assise est constituée par un support flexible dans le but de conférer au siège différentes positions d'utilisation.

La publication GB-A-255752 décrit un arrangement de sièges dans lequel le dossier du siège arrière peut être avancé contre le dossier d'un siège avant, tandisque l'assise dudit siège arrière repose sur le plancher du véhicule. Dans cet arrangement l'assise du siège doit être détachée du dossier et protégée dans sa position de rangement.

Les sièges escamotables connus ne permettent pas de tirer parti du maximum de l'espace occupé par le siège en position de service.

L'invention remédie à cet inconvénient et concerne plus particulièrement un siège à dossier basculant dans lequel l'assise peut basculer d'un angle de 180° autour de l'axe d'articulation de la béquille, support de l'assise et porté par la structure du véhicule et dans lequel la paroi de fond du dossier occupe une position avancée qui limite l'étendue d'un plateau de chargement du véhicule formé par le support du siège et par la face inférieure de l'assise.

D'autres caractéristiques et avantages de l'invention apparaîtront à la lecture d'un exemple de réalisation du siège, en référence au dessin annexé dans lequel:
- la figure 1 est une vue en élévation du siège en position d'utilisation dans un habitacle à deux rangées de sièges.
- la figure 2 est une vue en élévation du siège en position escamotée derrière la rangée de sièges avant de l'habitacle.
- la figure 3 est une vue de détail du verrou d'immobilisation du siège dans sa position d'utilisation.
- la figure 4 est une vue en coupe de la partie avant de l'assise du siège.

On conviendra d'appeler dans ce qui suit "siège" tout aussi bien un siège isolé, une banquette conventionnelle ou une banquette à coussin et/ou dossiers fractionnés.

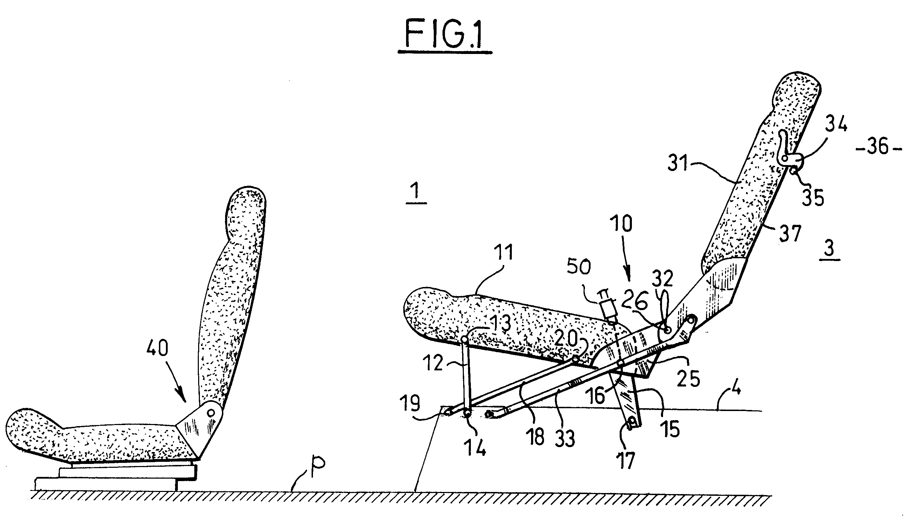

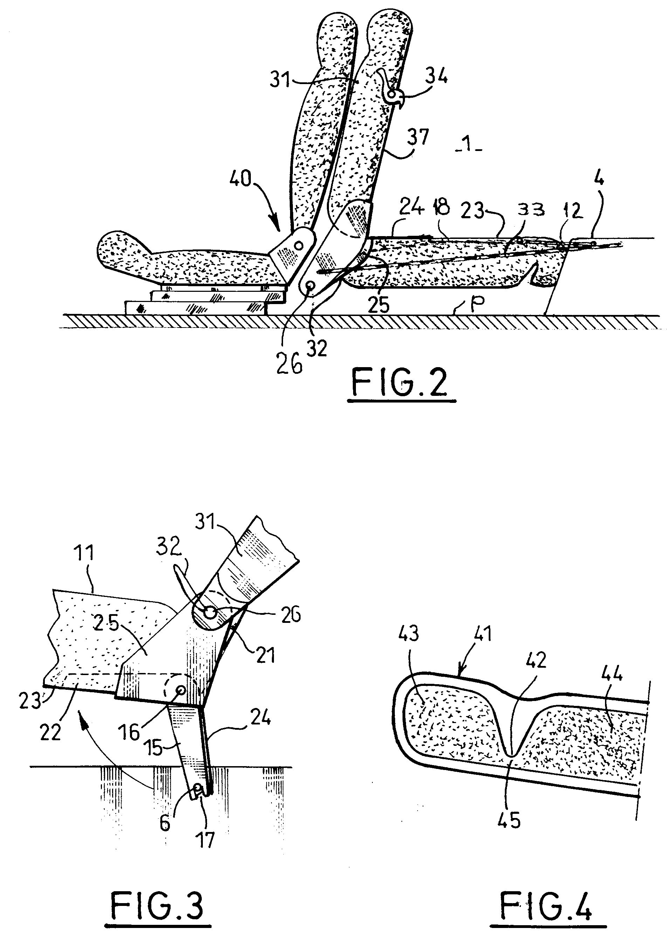

On a représenté partiellement à la figure 1 et 2 un habitacle 1 de véhicule automobile dans lequel le compartiment à bagages 3 est séparé du reste de l'habitacle par le dossier d'un siège 10.

Pour plus de simplicité on supposera que le siège 10 appartient à la dernière rangée de sièges, mais il est évident qu'il peut tout aussi bien appartenir à toute autre rangée de sièges.

Le siège 10 est fixé à un élément de structure du véhicule constitué par une surface de support 4 du siège.

A cet effet l'assise 11 du siège est supportée à l'avant par des béquilles 12 articulées respectivement à leurs extrémités autour d'un axe transversal 13 porté par l'assise 11 et autour d'un axe parallèle 14 porté par le support 4. La partie postérieure de l'assise 11 est supportée par un pied 15 articulé autour d'un axe 16 et possède un verrou d'immobilisation 17 au contact d'une gâche de retenue 6 portée par le support 4. Selon un mode de réalisation préféré du pied 15, le verrou 17 est réalisé sous la forme d'un crochet maintenu dans sa position de verrouillage sous l'action d'une bielle de poussée 18 soumise à la charge de l'assise. La bielle 18 est montée respectivement à articulation sur le support 4 autour d'un axe fixe 19 et sur l'assise 11 autour d'un axe 20. Une liaison mécanique de secours 21 relie la bielle 18 au verrou 17 ou au pied 15 et assure :
- l'engagement du verrou 17 dans la gâche 6 en position d'utilisation du siège représenté à la figure 1,
- le rangement du pied 15 ou la séparation du verrou 17 de la gâche 6 lorsque l'on communique à l'assise 11 un mouvement de basculement dans le sens antihoraire à partir de la position d'utilisation précitée.

Une trappe de rangement 22 est découpée dans la face inférieure 23 de l'assise 11 et reçoit un obturateur 24 rigidement relié au pied 15 pour fermer la trappe 22 lorsque le siège occupe la position de basculement représentée à la figure 2.

La partie arrière de l'assise 11 porte un flasque latéral 25 qui porte l'axe d'articulation 26 du dossier 31 du siège.

Le dossier 31 est ainsi monté à basculement autour de l'axe 26 qui porte une poignée de manoeuvre 32 et de traction de commande de relevage du siège.

Le dossier 31 est relié à sa partie inférieure au support 4 par des biellettes latérales basculantes 33 et porte dans sa partie supérieure un doigt de verrouillage 34 coopérant avec une gâche fixe 35 latérale solidaire d'une paroi de structure 36 de l'habitacle.

Ainsi que cela est montré aux figures 1 et 2, l'assise 11 est montée à basculement d'un angle de 180° autour de l'axe 14 d'articulation de la béquille 12, porté par le support 4 du siège.

Le dossier basculant 31 possède une paroi de fond 37 et est articulé autour de l'axe 26 porté par le flasque 25 de l'assise.

Ainsi que cela est représenté à la figure 2, la paroi de fond 37 occupe une position avancée contre le dossier d'un siège avant 40 et limite l'étendue du plateau de chargement du véhicule constitué par le support 4 du siège et par la face inférieure 23 de l'assise.

Selon une autre caractéristique du siège, le coussin de l'assise 11 possède un élément de support 41, monté à articulation autour d'un axe 42 situé à proximité de la face inférieure de l'assise.

Selon un mode de réalisation de l'assise 31, l'élément de support 41 est constitué par un bloc 43 de la matelassure de l'assise solidarisé au coussin 44 de l'assise par un amincissement 45 localisé constitutif d'une charnière d'articulation du bloc 43 par rapport au coussin 44.

On décrira ci-après le fonctionnement du siège dans le sens de la manoeuvre de basculement.

Le siège non chargé dont le dossier est libéré de sa gâche 35 est manoeuvré par la poignée 32. Le verrou 17 d'immobilisation libère alors automatique la gâche 6 par suite de la suppression de l'effort de traction sur la boucle 50 de la ceinture de sécurité.

L'ensemble du siège est surélevé et une liaison mécanique 21 assure le rangement du pied 15 et la séparation du verrou 17 de sa gâche 6.

Lorsque le bloc 43 de la matelassure entre en contact avec la paroi de séparation du support 4 du plancher "p" du véhicule, la charnière d'articulation du bloc 43 autorise le basculement de "l'assise" autour de l'axe 14.

Le dossier 31 du siège bascule alors vers l'avant contre le dossier du siège 40 tandisque l'assise 11 bascule d'un angle de 180° autour de l'axe d'articulation 14 de la béquille. On obtient de la sorte un plateau de chargement du véhicule à surface augmentée.

## Revendications

**1)** Siège escamotable à dossier basculant (31) qui possède une assise (11) supportée à l'avant par des béquilles (12) articulées à leurs extrémités autour d'axes transversaux (13, 14) portés respectivement par l'assise et par un élément de la structure (4) du véhicule, tandisque le dossier (31) est relié à sa partie inférieure audit élément de structure (4) par des biellettes (33) basculantes et porte dans sa partie supérieure au moins un doigt (34) de verrouillage coopérant avec une gâche (35) latérale solidaire d'un autre élément de la structure, et dans lequel l'assise (11) est montée à basculement d'un angle de 180° autour de l'axe (14) d'articulation de la béquille (12) porté par l'élément de la structure (4) du véhicule, caractérisé par le fait que la paroi de fond (37) du dossier (31) articulé sur l'assise (11) occupe une position avancée qui limite l'étendue d'un plateau de chargement du véhicule formé par le support (4) du siège et par la face inférieure (23) de l'assise.

**2)** Siège selon la revendication 1, caractérisé par le fait que le coussin de l'assise possède un élément de support (41) monté à articulation autour d'un axe (42) situé à proximité de la face inférieure (23) de l'assise.

**3)** Siège selon la revendication 2, caractérisé par le fait que l'élément de support (41) est constitué par un bloc (43) de la matelassure de l'assise dont la face postérieure est solidarisée au coussin (44) de l'assise par un amincissement (45) localisé.

**4)** Siège selon l'une quelconque des revendications 1 à 3, caractérisé par le fait que la portion de plateau de chargement formée par la face inférieure (23) de l'assise est munie d'une trappe (22) de rangement d'un pied (15) à verrou (17) d'immobilisation au contact de l'autre portion dudit plateau, sous l'action d'une charge appliquée à l'assise.

**5)** Siège escamotable selon l'une quelconque des revendications 1 à 4, caractérisé par le fait que l'axe d'articulation (26) du dossier (31) porte une poignée de traction (32) de commande de relevage du siège.
